(19) Europäisches Patentamt / European Patent Office / Office européen des brevets

(11) **EP 4 468 796 A1**

(12) **EUROPEAN PATENT APPLICATION**
published in accordance with Art. 153(4) EPC

(43) Date of publication:
**27.11.2024 Bulletin 2024/48**

(21) Application number: **22928358.5**

(22) Date of filing: **30.11.2022**

(51) International Patent Classification (IPC):
**H04W 56/00** (2009.01)

(52) Cooperative Patent Classification (CPC):
**G01S 7/41; G01S 13/931; H04W 56/00**

(86) International application number:
**PCT/CN2022/135677**

(87) International publication number:
**WO 2023/160098 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.02.2022 CN 202210178255**

(71) Applicant: **Huawei Technologies Co., Ltd.**
**Shenzhen, Guangdong 518129 (CN)**

(72) Inventors:
• **WU, Kun**
  **Shenzhen, Guangdong 518129 (CN)**
• **LI, Ting**
  **Shenzhen, Guangdong 518129 (CN)**
• **ZHANG, Zhiwei**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **SIGNAL SYNCHRONIZATION METHOD AND APPARATUS, AND READABLE STORAGE MEDIUM**

(57) This application provides a signal synchronization method, an apparatus, and a readable storage medium. The method includes: An electronic device controls a plurality of communication apparatuses to send a plurality of radio signals, where the plurality of radio signals are orthogonal to each other; and controls each communication apparatus to receive a first echo signal, where the first echo signal is an echo signal of a radio signal sent by a communication apparatus other than a communication apparatus receiving a target echo signal. The electronic device determines a first signal synchronization error based on the first echo signals received by the plurality of communication apparatuses, and then performs, based on the first signal synchronization error, synchronization error compensation for the first echo signal received by each communication apparatus. Signal synchronization can be implemented while hardware costs are reduced.

200

| |
|---|
| Control a plurality of communication apparatuses to send a plurality of radio signals, where the plurality of signals are orthogonal to each other — S201 |
| Control each communication apparatus to receive a first echo signal, where the first echo signal is an echo signal of a radio signal sent by a communication apparatus other than the communication apparatus receiving the first echo signal — S202 |
| Determine a first signal synchronization error based on the first echo signals received by the plurality of communication apparatuses — S203 |
| Perform, based on the first signal synchronization error, synchronization error compensation for the first echo signal received by each communication apparatus — S204 |

FIG. 2

Processed by Luminess, 75001 PARIS (FR)

## Description

This application claims priority to Chinese Patent Application No. 202210178255.1, filed with the China National Intellectual Property Administration on February 24, 2022 and entitled "SIGNAL SYNCHRONIZATION METHOD, APPARATUS, AND READABLE STORAGE MEDIUM", which is incorporated herein by reference in its entirety.

## TECHNICAL FIELD

This application relates to the communication field, and more specifically, to a signal synchronization method, an apparatus, and a readable storage medium.

## BACKGROUND

In an autonomous driving system, a single radar sensor, with a limited detection angle and distance range, may not be sensitive or accurate enough to detect some targets. On this basis, a plurality of radars can be combined to form a distributed radar system for data interaction and joint processing, improving detection sensitivity, measurement accuracy, resolution, and the like.

To implement joint processing of data of the plurality of radars in the distributed radar system, signal synchronization needs to be performed between the plurality of radars. A common distributed synchronization technology is co-local oscillation. That is, the plurality of radars share one radio frequency local oscillator, and a local oscillator signal sent by the radio frequency local oscillator is transmitted to the plurality of radars through radio frequency cables. In this synchronization manner, clock phase accuracy is easily affected by cable changes, such as time, weather, and temperature changes. To improve cable phase stability, specific materials and processing technologies are required, resulting in high system costs.

## SUMMARY

This application provides a signal synchronization method, an apparatus, and a readable storage medium, so that signal synchronization can be implemented while hardware costs are reduced.

According to a first aspect, a signal synchronization method is provided. The method may be performed by an electronic device or a module (for example, a chip) configured on (or configured for) the electronic device.

The method includes: controlling a plurality of communication apparatuses to send a plurality of radio signals, where the plurality of radio signals are orthogonal to each other; controlling each communication apparatus to receive a first echo signal, where the first echo signal is an echo signal of a radio signal sent by a communication apparatus other than the communication apparatus receiving the first echo signal; determining a first signal synchronization error based on the first echo signals received by the plurality of communication apparatuses; and performing, based on the first signal synchronization error, synchronization error compensation for the first echo signal received by each communication apparatus.

In the foregoing solution, according to the signal synchronization method provided in this application, signal synchronization error measurement is performed by using radio signals received by a plurality of radio communication apparatuses from each other, and signal synchronization between the plurality of radio communication apparatuses is implemented after error compensation is performed. Therefore, the electronic device may perform joint service measurement based on the radio signals of the plurality of communication apparatuses. This improves detection sensitivity, measurement accuracy, and resolution. In addition, implementation costs of signal synchronization can be reduced.

With reference to the first aspect, in some implementations of the first aspect, the plurality of radio signals are frequency division multiplexing signals, and the plurality of radio signals have different initial frequencies.

With reference to the first aspect, in some implementations of the first aspect, the plurality of radio signals are code division multiplexing signals or Doppler division multiplexing signals, and signal pulses of the plurality of radio signals have different initial phase modulation codewords.

In the foregoing solution, the plurality of radio signals are frequency division multiplexing signals, Doppler division multiplexing signals, or code division multiplexing signals. To be specific, radio signals sent by different communication apparatuses are orthogonal to each other, so that an echo signal of a radio signal from another communication apparatus can be obtained through separation of a mixed signal received by the communication apparatus, to estimate a synchronization error between signals.

With reference to the first aspect, in some implementations of the first aspect, the synchronization error includes one or more of a time error, a frequency error, and a phase error between the plurality of radio signals.

With reference to the first aspect, in some implementations of the first aspect, a signal synchronization error between the plurality of communication apparatuses is periodically detected, and the determining a first signal synchronization error based on the first echo signals received by the plurality of communication apparatuses includes: obtaining a second signal synchronization error in a target detection period based on the first echo signals received by the plurality of communication apparatuses; and filtering the second signal synchronization error and a third signal synchronization error, to determine the first signal synchronization error, where the third signal synchronization error is a signal synchronization error determined in a period before the target detection period.

With reference to the first aspect, in some implementations of the first aspect, the controlling each communication apparatus to receive a first echo signal includes: controlling each communication apparatus to receive a second echo signal, where the second echo signal includes a third echo signal and the first echo signal, and the third echo signal is an echo signal of a radio signal sent by the communication apparatus receiving the second echo signal; separating the third echo signal and the first echo signal from the second echo signal; and performing service measurement based on the third echo signal.

In the foregoing solution, signal synchronization error estimation and compensation, and echo signal-based service measurement can be implemented at the same time, improving detection efficiency.

According to a second aspect, a signal synchronization apparatus is provided. In a design, the apparatus may include a module in a one-to-one correspondence with the method/operation/step/action described in the first aspect. The module may be a hardware circuit or software, or may be implemented in a combination of the hardware circuit and the software. In a design, the apparatus includes: a control unit, configured to control a plurality of communication apparatuses to send a plurality of radio signals, where the plurality of radio signals are orthogonal to each other; and the control unit is further configured to control each communication apparatus to receive a first echo signal, and the first echo signal is an echo signal of a radio signal sent by a communication apparatus other than the communication apparatus receiving the first echo signal; and a processing unit, configured to determine a first signal synchronization error based on the first echo signals received by the plurality of communication apparatuses; and the processing unit is further configured to perform, based on the first signal synchronization error, synchronization error compensation for the first echo signal received by each communication apparatus.

With reference to the second aspect, in some implementations of the second aspect, the plurality of radio signals are frequency division multiplexing signals, and the plurality of radio signals have different initial frequencies.

With reference to the second aspect, in some implementations of the second aspect, the plurality of radio signals are code division multiplexing signals or Doppler division multiplexing signals, and signal pulses of the plurality of radio signals have different initial phase modulation codewords.

With reference to the second aspect, in some implementations of the second aspect, the synchronization error includes one or more of a time error, a frequency error, and a phase error between the plurality of radio signals.

With reference to the second aspect, in some implementations of the second aspect, a signal synchronization error between the plurality of communication apparatuses is periodically detected, and the processing unit is specifically configured to:

obtain a second signal synchronization error in a target detection period based on the first echo signals received by the plurality of communication apparatuses; and

filter the second signal synchronization error and a third signal synchronization error, to determine the first signal synchronization error, where the third signal synchronization error is a signal synchronization error determined in a period before the target detection period.

With reference to the second aspect, in some implementations of the second aspect, the control unit is specifically configured to control each communication apparatus to receive a second echo signal, the second echo signal includes a third echo signal and the first echo signal, and the third echo signal is an echo signal of a radio signal sent by the communication apparatus receiving the second echo signal; the processing unit is further configured to separate the third echo signal and the first echo signal from the second echo signal; and the processing unit is further configured to perform service measurement based on the third echo signal.

According to a third aspect, a signal synchronization apparatus is provided, including a processor. The processor may implement the method according to any one of the first aspect and the possible implementations of the first aspect. Optionally, the signal synchronization apparatus further includes a memory. The processor is coupled to the memory, and may be configured to execute instructions in the memory, to implement the method according to any one of the first aspect and the possible implementations of the first aspect. Optionally, the signal synchronization apparatus further includes a communication interface, and the processor is coupled to the communication interface.

In an implementation, the signal synchronization apparatus is an electronic device. The communication interface may be a transceiver or an input/output interface.

In another implementation, the signal synchronization apparatus is a chip configured in the electronic device. When the signal synchronization apparatus is a chip configured in the electronic device, the communication interface may be an input/output interface.

Optionally, the transceiver may be a transceiver circuit. Optionally, the input/output interface may be an input/output circuit.

According to a fourth aspect, a processor is provided, including an input circuit, an output circuit, and a processing circuit. The processing circuit is configured to receive a signal through the input circuit, and transmit the signal through the output circuit, to enable the processor to perform the method according to any one of the first aspect and the possible implementations of the first aspect.

In a specific implementation process, the processor may be one or more chips. The input circuit may be an input pin. The output circuit may be an output pin. The processing circuit may be a transistor, a gate circuit, a trigger, any logic circuit, or the like. An input signal received by the input circuit may be received and input by, for example, but not limited to, a receiver. A signal output by the output circuit may be output to, for example, but not limited to, a transmitter and transmitted by the transmitter. In addition, the input circuit and the output circuit may be a same circuit, where the circuit is used as the input circuit and the output circuit at different moments. A specific implementation of the processor and the various circuits are not limited in embodiments of this application.

According to a fifth aspect, a computer program product is provided. The computer program product includes a computer program (which may also be referred to as code or instructions). When the computer program is run, a computer is enabled to perform the method according to any one of the first aspect and the possible implementations of the first aspect.

According to a sixth aspect, a computer-readable storage medium is provided. The computer-readable storage medium stores a computer program (which may also be referred to as code or instructions). When the computer program is run on a computer, the computer is enabled to perform the method according to any one of the first aspect and the possible implementations of the first aspect.

## BRIEF DESCRIPTION OF DRAWINGS

FIG. 1 is a diagram of an electronic device applicable to a signal synchronization method according to an embodiment of this application;
FIG. 2 is a schematic flowchart of a signal synchronization method according to an embodiment of this application;
FIG. 3 is a diagram of frequency division multiplexing of a plurality of radio signals according to an embodiment of this application;
FIG. 4 is a diagram of code division multiplexing of a plurality of radio signals according to an embodiment of this application;
FIG. 5 is a diagram of a transmit and receive antenna of a communication apparatus according to an embodiment of this application;
FIG. 6 is another schematic flowchart of a signal synchronization method according to an embodiment of this application;
FIG. 7 is a diagram of a structure of a signal synchronization apparatus according to an embodiment of this application; and
FIG. 8 is another diagram of a structure of a signal synchronization apparatus according to an embodiment of this application.

## DESCRIPTION OF EMBODIMENTS

To clearly describe the technical solutions in embodiments of this application, words such as "first" and "second" are used in embodiments of this application to distinguish between same items or similar items that provide basically same functions or purposes. For example, a first network and a second network are merely intended to distinguish between different networks, and are not intended to limit a sequence thereof. A person skilled in the art may understand that the words such as "first" and "second" do not limit a quantity or an execution sequence, and the words such as "first" and "second" do not indicate a definite difference.

It should be noted that, in this application, words "example" or "for example" are used to represent giving an example, an illustration, or a description. Any embodiment or design solution described as an "example" or "for example" in this application should not be explained as being more preferred or having more advantages than another embodiment or design solution. To be precise, the words such as "example" or "for example" are intended to present a related concept in a specific manner.

The following describes technical solutions of this application with reference to accompanying drawings.

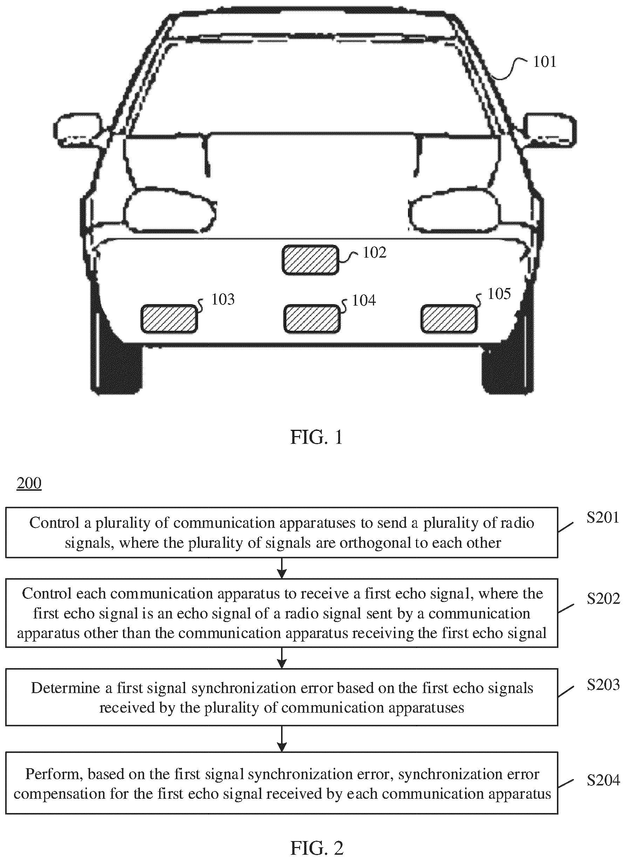

The technical solutions provided in embodiments of this application may be applied to an electronic device configured with a plurality of radio communication apparatuses. FIG. 1 is a diagram of an electronic device applicable to a signal synchronization method according to an embodiment of this application. As shown in FIG. 1, the electronic device may be a vehicle, for example, a vehicle 101 shown in FIG. 1. The vehicle 101 may be configured with a plurality of radio communication apparatuses. The plurality of radio communication apparatuses may be a vehicle-mounted radar 102, a vehicle-mounted radar 103, a vehicle-mounted radar 104, and a vehicle-mounted radar 105 shown in FIG. 1. A plurality of vehicle-mounted radars in the vehicle 101 may form a distributed radar system to perform joint service measurement, such as target detection, recognition, and distance measurement.

However, a prerequisite for the electronic device to perform joint service measurement by using radio signals of the plurality of communication apparatuses is that the radio signals of the plurality of communication apparatuses need to be synchronized with each other. Currently, in a conventional synchronization technology, the plurality of communication apparatuses share one radio frequency local oscillator, and a local oscillator signal generated by the radio frequency local oscillator is transmitted to the plurality of communication apparatuses through radio frequency cables. In this synchronization manner, clock phase accuracy is easily affected by cable changes, such as time, weather, and temperature changes. To improve cable phase stability, specific materials and processing technologies are required, resulting in high system costs.

For a problem that the sharing of one radio frequency local oscillator by the plurality of radio communication apparatuses is easily affected by a cable change, this application proposes that the plurality of radio communication apparatuses may receive an air interface (air interface for short) signal from each other to perform synchronization error measurement, and signal synchronization between the plurality of radio communication apparatuses is implemented after error compensation is performed. Therefore, the electronic device may perform joint service measurement based on the radio signals of the plurality of communication apparatuses.

The following describes the signal synchronization method provided in this application with reference to the accompanying drawings.

FIG. 2 is a schematic flowchart of a signal synchronization method according to an embodiment of this application. The signal synchronization method shown in FIG. 2 may be performed by an electronic device. The electronic device is configured with a plurality of communication apparatuses, and each communication apparatus has a radio signal receiving and sending function. The electronic device may be a vehicle, and the communication apparatus may be a vehicle-mounted radar. However, this application is not limited thereto. When the electronic device having a plurality of radio communication apparatuses needs to perform joint processing on signals of the plurality of radio communication apparatuses, the signal synchronization method provided in this application may be used to implement signal synchronization. It should be noted that the signal synchronization method shown in FIG. 2 may be performed by the electronic device, or may be performed by a processing apparatus configured in the electronic device. An example in which the method is performed by the electronic device is used below for description. However, this application is not limited thereto. The method includes but is not limited to the following steps.

S201: The electronic device controls the plurality of communication apparatuses to send a plurality of radio signals, where the plurality of radio signals are orthogonal to each other.

The electronic device controls the plurality of communication apparatuses to send the radio signals. Radio signals between different communication apparatuses are orthogonal to each other, so that the electronic device can separate, from an echo signal received by each communication apparatus, a radio signal sent by the communication apparatus (referred to as a collocated signal, which is sent and received by one communication apparatus) and a radio signal sent by another communication apparatus (referred to as a distributed signal, which is received by the same communication apparatus as the collocated signal), and a signal synchronization error between communication apparatuses is determined based on the distributed signal of the communication apparatus.

In an implementation, the plurality of radio signals sent by the plurality of communication apparatuses are frequency division multiplexing signals. In other words, the plurality of signals are orthogonal to each other in frequency domain, and the plurality of radio signals have different initial frequencies.

The electronic device sets different initial frequencies of the radio signals sent by the plurality of communication apparatuses, so that the radio signals sent by the plurality of communication apparatuses are orthogonal to each other in frequency domain.

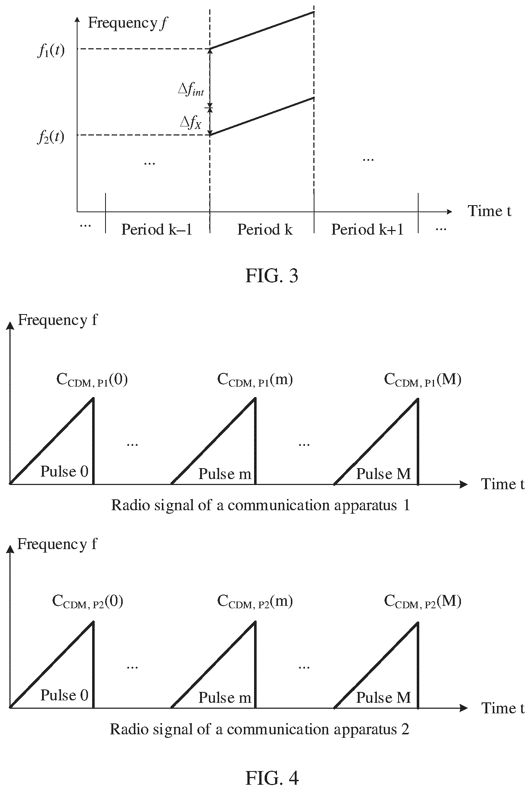

For example, two communication apparatuses, namely, a communication apparatus 1 and a communication apparatus 2, are used. The electronic device may set different initial frequencies of radio signals separately sent by the communication apparatus 1 and the communication apparatus 2. For example, the electronic device sets a difference between the initial frequencies of the two communication apparatuses to $\Delta f_{int}$. For example, as shown in FIG. 3, $f_1(t)$ represents a frequency of a radio signal sent by the communication apparatus 1 at a moment t, and $f_2(t)$ represents a frequency of a radio signal sent by the communication apparatus 2 at the moment t. In this case,

$$f_2(t) = f_1(t) + \Delta f_X + \Delta f_{int}$$

$\Delta f_X$ represents a natural frequency error between $f_1(t)$ and $f_2(t)$. That is, $\Delta f_X$ represents a frequency synchronization error between the radio signals that are of the two communication apparatuses and that need to be obtained by the electronic device.

Optionally, the electronic device periodically performs signal synchronization error detection, and initial frequency differences in different periods may be different.

For example, an initial frequency difference $\Delta f_{int,k}$ between the two communication apparatuses in a period k in the foregoing example may be:

$$\Delta f_{int,k} = \alpha(k)\Delta f_{int}$$

$\alpha(k)$ represents an initial frequency offset coefficient between a radio signal of the communication apparatus 1 and a radio signal of the communication apparatus 2 corresponding to a $k^{th}$ period. In this case,

$$f_2(t) = f_1(t) + \Delta f_X + \Delta f_{int,k}$$

In another implementation, the plurality of signals are Doppler division multiplexing (Doppler division multiplexing, DDM) signals, and signal pulses of the plurality of signals have different initial phase modulation codewords.

The electronic device may select, from a DDM codeword set, different initial phase modulation codewords of the signal pulses for the communication apparatus 1 and the communication apparatus 2, so that the radio signals that are sent by the communication apparatus 1 and the communication apparatus 2 and that have different initial phase modulation codewords are orthogonal in Doppler domain. For example, a quantity of signal pulses of the communication apparatus is M, and the electronic device selects different codewords from an N-phase DDM codeword set whose length is M as initial phase codewords of the signal pulses of the radio signals of the communication apparatus 1 and the communication apparatus 2.

For example, if the electronic device selects a $q_1$th codeword in the N-phase DDM codeword set for the communication apparatus 1, an initial phase modulation codeword of the $m$th radio signal pulse of the communication apparatus 1 is $C_{DDM}(m, q_1) = e^{j*sign*2\pi*q_1*m/N}$, where $sign = \pm 1$, $m = 0,1,2, ..., M - 1$. If the electronic device selects a $q_2$th codeword in the N-phase DDM codeword set for the communication apparatus 2, an initial phase modulation codeword of the $m$th radio signal pulse of the communication apparatus 1 is $C_{DDM}(m, q_2) = e^{j*sign*2\pi*q_2*m/N}$, where $q_1 \neq q_2$. Doppler division multiplexing of the radio signal sent by the communication apparatus 1 and the radio signal sent by the communication apparatus 2 is implemented, so that the radio signals sent by different communication apparatuses are orthogonal to each other.

In still another implementation, the plurality of signals are code division multiplexing signals. In other words, the plurality of signals are orthogonal to each other in code domain, and initial phase modulation codewords of the plurality of signals are different.

The electronic device may select, from a code division multiplexing (code division multiplexing, CDM) codeword set, different initial phase modulation codewords of the signal pulses for the communication apparatus 1 and the communication apparatus 2, so that the radio signals that are sent by the communication apparatus 1 and the communication apparatus 2 and that have different initial phase modulation codewords are orthogonal to each other in code domain. For example, a quantity of signal pulses of the communication apparatus is M, and the electronic device selects different codewords from a CDM codeword set whose length is M as initial phase codewords of the signal pulses of the radio signals of the communication apparatus 1 and the communication apparatus 2.

For example, a bi-phase random code in the CDM codeword set is $C_{CDM,P}(m) = e^{j*P(m)}$. $P$ represents a sequence whose length is M, and a value $P(m)$ in the sequence is 0 or 1, where $m = 0,1,2, ..., M - 1$. In this case, a pulse initial phase modulation codeword selected by the electronic device for the communication apparatus 1 is $C_{CDM,P_1}(m) = e^{j*P_1(m)}$, and a pulse initial phase modulation codeword selected by the electronic device for the communication apparatus 2 is $C_{CDM,P_2}(m) = e^{j*P_2(m)}$, where $P_1 \neq P_2$. FIG. 4 is a diagram of the radio signal sent by the communication apparatus 1 and the radio signal sent by the communication apparatus 2. As shown in FIG. 4, initial phase codewords respectively corresponding to a pulse 0, a pulse m, and a pulse M of the radio signal sent by the communication apparatus 1 are $C_{CDM,P_1}(0)$, $C_{CDM,P_1}(m)$, and $C_{CDM,P_1}(M)$. Codewords respectively corresponding to a pulse 0, a pulse m, and a pulse M of the radio signal sent by the communication apparatus 2 are $C_{CDM,P_2}(0)$, $C_{CDM,P_2}(m)$, and $C_{CDM,P_2}(M)$. Different initial phase codewords of the signal pulses are selected. In this case, code division multiplexing of the radio signal sent by the communication apparatus 1 and the radio signal sent by the communication apparatus 2 is implemented, so that the radio signals sent by different communication apparatuses are orthogonal to each other in code domain.

It should be noted that the foregoing uses two communication apparatuses of the electronic device as an example for description. However, this application is not limited thereto. The electronic device may be configured with a plurality of communication apparatuses, and radio signals of the plurality of communication apparatuses may be frequency division multiplexing signals, Doppler division multiplexing signals, or code division multiplexing signals. For a specific implementation, refer to the foregoing descriptions of the two communication apparatuses. For brevity, details are not described herein again.

S202: The electronic device controls each communication apparatus to receive a first echo signal, where the first echo signal is an echo signal of a radio signal sent by a communication apparatus other than the communication apparatus receiving the target echo signal.

In other words, the electronic device controls each communication apparatus to receive an echo signal of another communication apparatus. That is, the first echo signal is a distributed signal.

Specifically, the echo signal received by each communication apparatus is a second echo signal. The second echo signal includes the first echo signal and a third echo signal. The third echo signal is an echo signal of a radio signal sent by the communication apparatus receiving the second echo signal. The electronic device may separate the first echo signal and the third echo signal from the second echo signal, to obtain the first echo signal. In this case, the electronic device may determine a synchronization error between the radio signals based on the first echo signals received by the plurality of apparatuses.

For example, the electronic device controls the communication apparatus 1 to send a radio signal A, and the communication apparatus 2 to send a radio signal B. An echo signal C (that is, an example of the second echo signal) received by the communication apparatus 1 is a mixed signal of an echo signal (that is, an example of the third echo signal) of the radio signal A and an echo signal (that is, an example of the first echo signal) of the radio signal B. After the electronic device receives the echo signal C received by the communication apparatus 1, because the radio signal A and the radio signal B are orthogonal to each other, the communication apparatus may obtain the echo signal of the radio signal A and the echo signal of the radio signal B through separation of the echo signal C. For the echo signal received by the communication apparatus 2, the echo signal of the radio signal A from the communication apparatus 1 may be obtained in a similar manner.

Optionally, the communication apparatus sends the radio signal through a synchronization channel, and receives the echo signal of the radio signal through the synchronization channel. In other words, a transmit and receive antenna (denoted as a TRX) is configured on the synchronization channel, and the transmit and receive antenna may receive a signal and send a signal.

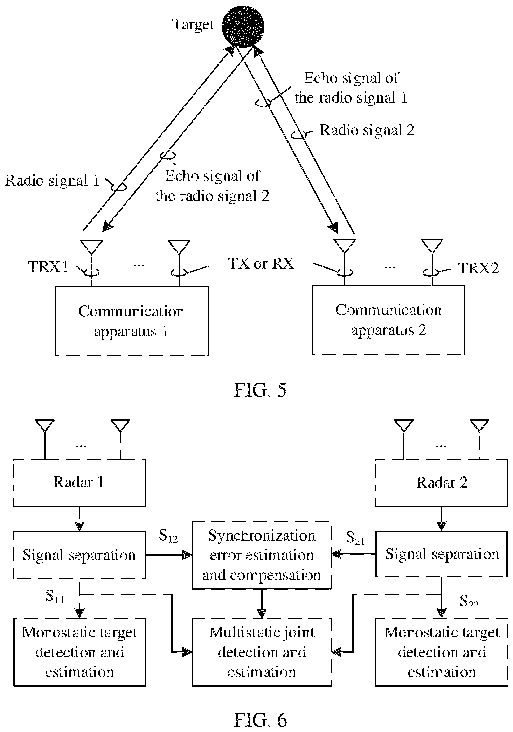

For example, as shown in FIG. 5, the communication apparatus (for example, the communication apparatus 1 and the communication apparatus 2) includes the transmit and receive antenna TRX, and the communication apparatus may further include a receive antenna and a transmit antenna. The receive antenna can only receive a signal, and the transmit antenna can only send a signal. The communication apparatus 1 sends a radio signal 1 through a TRX 1, and receives an echo signal of a radio signal 2 through the TRX 1. The communication apparatus 2 sends the radio signal 2 through a TRX 2, and receives an echo signal of the radio signal 1 through the TRX 2. In this case, the radio signal 1 and the radio signal 2 have reciprocity. That is, a propagation path of the radio signal 1 is the same as a propagation path of the radio signal 2. For example, the path of the radio signal 1 is from the TRX 1 to the target, and then the radio signal 1 is reflected from the target to the TRX 2. The path of the radio signal 2 is from the TRX 2 to the target, and then the radio signal 2 is reflected from the target to the TRX 1. Inaccurate synchronization error estimation caused by inconsistent propagation paths and caused by receiving and sending signals by different antennas can be avoided.

S203: The electronic device determines a first signal synchronization error based on the first echo signals received by the plurality of communication apparatuses.

Optionally, the synchronization error includes one or more of a time error, a frequency error, and a phase error between the plurality of radio signals.

The communication apparatus may determine a signal frequency error based on the first echo signals received by the plurality of communication apparatuses.

For example, the communication apparatus 1 performs frequency mixing by using a local oscillator signal of the communication apparatus 1 and the echo signal that is of the radio signal 2 and that is received from the communication apparatus 2, to obtain a beat frequency corresponding to the radio signal 2, where the beat frequency is $f_{b12}(t)$. The communication apparatus 2 performs frequency mixing by using a local oscillator signal of the communication apparatus 2 and the echo signal that is of the radio signal 1 and that is received from the communication apparatus 1, to obtain a beat frequency corresponding to the radio signal 1, where the beat frequency is $f_{b21}(t)$. In this case, the electronic device may obtain, based on $f_{b12}(t)$ and $f_{b21}(t)$, a frequency error $\Delta f_X$ between the radio signals of the two communication apparatuses as follows:

$$\Delta f_X = \left( f_{b12}(t) - f_{b21}(t) \right)/2 - \Delta f_{int}$$

If the radio signals sent by the two communication apparatuses have different initial frequency differences in different periods, for example, an initial frequency difference of the radio signals sent by the two communication apparatuses in a period k is $\Delta f_{int,k} = \alpha(k) \Delta f_{int}$, the electronic device may obtain, based on $f_{b12}(t)$ and $f_{b21}(t)$, the frequency error $\Delta f_X$ between the radio signals of the two communication apparatuses as follows:

$$\Delta f_X = \left( f_{b12}(t) - f_{b21}(t) \right)/2 - \alpha(k) \Delta f_{int}$$

$\Delta f_X$ may be used as a frequency error in the first signal synchronization error, and the electronic device may perform compensation for a to-be-sent signal of each communication apparatus based on $\Delta f_X$.

Optionally, $\Delta f_X$ is a second signal synchronization error. The electronic device performs filtering based on the second signal synchronization error and a third signal synchronization error, to determine the first signal synchronization error. The third signal synchronization error is a signal synchronization error determined in a period before the period k.

For example, after filtering in the period k-1, the electronic device obtains a frequency error $\Delta f_{X,k-1}$ (that is, an example of the third signal synchronization error). After obtaining a frequency error $\Delta f_X$ (that is, an example of the second signal synchronization error) in the period k, the communication apparatus filters $\Delta f_{X,k-1}$ and $\Delta f_X$ to obtain a frequency error $\Delta f_{X,k}$ in the first signal synchronization error, where

$$\Delta f_{X,k} = Filter\left( \Delta f_X, \Delta f_{X,k-1} \right)$$

The electronic device may filter the signal synchronization error in a filtering manner such as Alpha (Alpha filtering) or Kalman (Kalman) filtering. However, this application is not limited thereto.

For a frequency-modulated continuous wave (frequency-modulated continuous wave, FMCW) signal, a relationship between a signal frequency error $\Delta f$ and a time error $\Delta \tau$ is as follows:

$$\Delta f = \mu \Delta \tau$$

For example, if the radio signal sent by the communication apparatus is an FMCW signal, after the electronic device obtains the frequency error between the plurality of radio signals, the time error $\Delta \tau = \Delta f / \mu$ between the plurality of radio signals may be determined. $\Delta f$ may be the foregoing $\Delta f_X$ or $\Delta f_{X,k}$.

The communication apparatus may determine a phase error $\Delta \phi$ in the first signal synchronization error based on the first echo signals received by the plurality of communication apparatuses, where

$$\Delta \varphi(t) = \frac{1}{2} arg \left( S_{ADC12}(t) / \left( S_{ADC21}(t) \right)^* \right)$$

arg($x$) represents calculating an argument of a complex number of $x$, and ($x$)* represents a conjugate of $x$. $S_{ADC12}(t)$ is an echo analog-to-digital converter (analog-to-digital converter, ADC) signal that is received by the communication apparatus 1 and that is from the communication apparatus 2, namely, a digital signal obtained by analog-to-digital conversion on the echo signal of the radio signal 2. $S_{ADC21}(t)$ is an echo ADC signal that is received by the communication apparatus 2 and that is from the communication apparatus 1, namely, a digital signal obtained by analog-to-digital conversion on the echo signal of the radio signal 1.

S204: The electronic device performs, based on the first signal synchronization error, synchronization error compensation for the first echo signal received by each communication apparatus.

After obtaining the frequency error $\Delta f$ and the phase error $\Delta \phi(t)$, the electronic device may perform the synchronization error compensation for the received signal of the communication apparatus. For example, the synchronization error compensation may be performed according to the following formula, to separately obtain compensated signals $S'_{ADC12}$ and $S'_{ADC21}$.

$$S'_{ADC12}(t,i) = S_{ADC12}(t,i) * e^{-j(\Delta \varphi(t) + 2\pi t * \Delta f)}$$

$$S'_{ADC21}(t,i) = S_{ADC21}(t,i) * e^{-j(\Delta \varphi(t) - 2\pi t * \Delta f)}$$

$i$ is a receive channel number, and $\Delta f$ may be the foregoing $\Delta f_X$ or $\Delta f_{X,k}$.

The electronic device may determine the first signal synchronization error based on the first echo signal received by one receive channel of each of the plurality of communication apparatuses. After obtaining the first signal synchronization error, the electronic device performs, based on the first signal synchronization error, synchronization error compensation for the first echo signal received by each receive channel of the communication apparatus.

For example, the electronic device performs, based on a first signal synchronization error received by the foregoing synchronization channel configured with the transmit and receive antenna TRX, synchronization error compensation for the first echo signal received by each receive channel of the communication apparatus. Specifically, based on the first signal synchronization error, the electronic device performs synchronization error compensation for the first echo signal received by the synchronization channel (the synchronization channel belongs to both the send channel and the receive channel) of the communication apparatus, and performs synchronization error compensation for a first echo signal received by another receive channel of the communication apparatus.

The electronic device may perform service measurement based on the compensated signals $S'_{ADC12}$ and $S'_{ADC21}$. In the foregoing example, the electronic device may perform service measurement after performing synchronization error compensation for the distributed signal. Alternatively, the electronic device may perform error compensation for the collocated signal based on a service measurement requirement and a signal synchronization error obtained through measurement. In this case, corresponding service measurement is performed based on the compensated echo signals of the different communication apparatuses.

In addition, the electronic device may further separately perform parameter adjustment on radio signals of a next frame (or a next detection period) of the plurality of communication apparatuses based on the synchronization error (for example, the time error and the frequency error) obtained through measurement.

As described above, for the FMCW signal, the relationship between the signal frequency error $\Delta f$ and the time error $\Delta \tau$ may be $\Delta f = \mu \Delta \tau$, where $\Delta f$ may be the foregoing $\Delta f_X$ or $\Delta f_{X,k}$.

In an implementation, the electronic device may perform frequency error compensation for next-frame radio signals of the plurality of communication apparatuses based on the frequency error $\Delta f$, so that both time and frequencies of the radio signals of the plurality of communication apparatuses are synchronized.

In another implementation, the electronic device may perform time error compensation for next-frame radio signals of the plurality of communication apparatuses based on the obtained $\Delta \tau$, so that both time and frequencies of the radio signals of the plurality of communication apparatuses are synchronized.

In still another implementation, the electronic device may perform both the time compensation and the frequency compensation for the next-frame radio signals of the plurality of communication apparatuses.

For example, a compensation amount of the time compensation performed by the electronic device on the radio signal is $\Delta\tau_1$, and a compensation amount of the frequency compensation is $\Delta f_1$. $\Delta\tau_1$ and $\Delta f_1$ satisfy:

$$\Delta f = \Delta f_1 + \mu\Delta\tau_1$$

$$\Delta\tau = \Delta\tau_1 + \Delta f_1/\mu$$

In a specific implementation, the error compensation may be performed in one of the foregoing implementations based on an implementation requirement. This is not limited in this application.

In an example, the electronic device may be a vehicle. The vehicle may be configured with a plurality of radars. The vehicle may implement synchronization of radio signals of the plurality of radars by using the signal synchronization method provided in embodiments of this application. As shown in FIG. 6, the vehicle may be configured with two radars, for example, a radar 1 and a radar 2. The radar 1 sends a radio signal 1, and the radar 2 sends a radio signal 2. The radio signal 1 and the radio signal 2 are orthogonal to each other. An echo signal 1 received by the radar 1 includes an echo signal (namely, a collocated signal, for example, $S_{11}$ shown in FIG. 6) of the radio signal 1 and an echo signal (namely, a remote signal, for example, $S_{12}$ shown in FIG. 6) of the radio signal 2. An echo signal 2 received by the radar 2 includes an echo signal (namely, a collocated signal, for example, $S_{22}$ shown in FIG. 6) of the radio signal 2 and an echo signal (namely, a remote signal, for example, $S_{21}$ shown in FIG. 6) of the radio signal 1. The vehicle separately performs signal separation on the echo signal 1 and the echo signal 2, and separately obtains the collocated signal and distributed signal. The collocated signal may be used for monostatic target detection and estimation. In addition, the vehicle estimates a signal synchronization error, for example, one or more of a frequency error, a time error, and a phase error, based on the distributed signal obtained through the signal separation. To be specific, distributed signals are the echo signal that is of the radio signal 2 and that is received by the radar 1 and the echo signal that is of the radio signal 1 and that is received by the radar 2. The echo signal is compensated based on the signal synchronization error, and the compensated echo signal may be used for multistatic joint detection and estimation.

In the foregoing solution, according to the signal synchronization method provided in this application, signal synchronization error measurement is performed by using the radio signals received by the plurality of radio communication apparatuses from each other, and signal synchronization between the plurality of radio communication apparatuses is implemented after the error compensation is performed. Therefore, the electronic device may perform joint service measurement based on the radio signals of the plurality of communication apparatuses. This improves detection sensitivity, measurement accuracy, and resolution.

The foregoing describes the signal synchronization method provided in embodiments of this application with reference to FIG. 2 to FIG. 6. The following describes a signal synchronization apparatus and an electronic device provided in embodiments of this application.

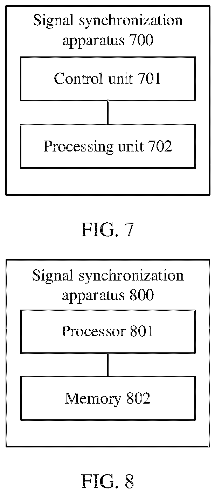

FIG. 7 is a diagram of a structure of a signal synchronization apparatus according to an embodiment of this application. The signal synchronization apparatus may be implemented by using software, hardware, or a combination thereof, and is referred to as an electronic device or a part of an electronic device. The signal synchronization apparatus may include a control unit 701 and a processing unit 702.

The control unit 701 is configured to: control a plurality of communication apparatuses to send a plurality of radio signals, where the plurality of radio signals are orthogonal to each other; and control each communication apparatus to receive a first echo signal, where the first echo signal is an echo signal of a radio signal sent by a communication apparatus other than the communication apparatus receiving the first echo signal. The processing unit 702 is configured to: determine a first signal synchronization error based on the first echo signals received by the plurality of communication apparatuses, and perform, based on the first signal synchronization error, synchronization error compensation for the first echo signal received by each communication apparatus.

Optionally, the signal synchronization apparatus periodically detects a signal synchronization error between the plurality of communication apparatuses. The processing unit 702 is specifically configured to obtain a second signal synchronization error in a target detection period based on the first echo signals received by the plurality of communication apparatuses, and filter the second signal synchronization error and a third signal synchronization error, to determine the first signal synchronization error. The third signal synchronization error is a signal synchronization error determined in a period before the target detection period.

Optionally, the control unit 701 is specifically configured to control each communication apparatus to receive a second echo signal. The second echo signal includes a third echo signal and the first echo signal. The third echo signal is an echo signal of a radio signal sent by the communication apparatus receiving the second echo signal. The processing unit 702 is further configured to separate the third echo signal and the first echo signal from the second echo signal. The processing unit 702 is further configured to perform service measurement based on the third echo signal.

FIG. 8 is another diagram of a structure of a signal synchronization apparatus according to an embodiment of this application. The signal synchronization apparatus includes a processor 801 and a memory 802. The memory 802 is configured to store a computer program. The processor 801 is configured to execute the computer program in the memory 802, to implement the signal synchronization method provided in the embodiment shown in FIG. 2. For details, refer to the descriptions in the foregoing method embodiments. For brevity, details are not described herein again.

In a specific implementation, the memory 802 may alternatively be integrated into the processor 801, or may be independent of the processor 801. The processor 801 may correspond to the processing unit 702 in FIG. 7.

An embodiment of this application further provides a processing apparatus, including a processor and a (communication) interface. The processor is configured to perform the method in the foregoing embodiments shown in FIG. 2.

It should be understood that the processing apparatus may be one or more chips. For example, the processing apparatus may be a field programmable gate array (field programmable gate array, FPGA), an application-specific integrated circuit (application-specific integrated circuit, ASIC), a system on chip (system on chip, SoC), a central processing unit (central processor unit, CPU), a network processor (network processor, NP), a digital signal processing circuit (digital signal processor, DSP), a micro controller unit (micro controller unit, MCU), a programmable logic device (programmable logic device, PLD), or another integrated chip.

According to the methods provided in embodiments of this application, this application further provides a computer program product. The computer program product includes computer program code. When the computer program code is executed by one or more processors, an apparatus including the processor is enabled to perform the method in the embodiment shown in FIG. 2.

All or some of the technical solutions provided in embodiments of this application may be implemented by using software, for example, may be implemented in a form of a computer program product. The computer program product includes one or more computer instructions. When the computer program instructions are loaded and executed on a computer, some or all of the procedures or functions of the method provided in embodiments of this application are generated.

According to the method provided in embodiments of this application, this application further provides a computer-readable storage medium. The computer-readable storage medium stores program code. When the program code is executed by one or more processors, an apparatus including the processor is enabled to perform the method in the embodiment shown in FIG. 2. The computer-readable storage medium may be any usable medium accessible by a computer, or a data storage device integrating one or more usable media. The readable medium may be a magnetic medium (for example, a floppy disk, a hard disk drive, or a magnetic tape), an optical medium (for example, a digital video disc (digital video disc, DVD)), a semiconductor medium, or the like.

In the several embodiments provided in this application, it should be understood that the disclosed apparatus and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one location, or may be distributed on a plurality of network units. Some or all of the units may be selected based on actual requirements to achieve the objectives of the solutions of embodiments.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal synchronization method, comprising:

   controlling a plurality of communication apparatuses to send a plurality of radio signals, wherein the plurality of radio signals are orthogonal to each other;
   controlling each communication apparatus to receive a first echo signal, wherein the first echo signal is an echo signal of a radio signal sent by a communication apparatus other than the communication apparatus receiving the first echo signal;
   determining a first signal synchronization error based on the first echo signals received by the plurality of communication apparatuses; and
   performing, based on the first signal synchronization error, synchronization error compensation for the first echo signal received by each communication apparatus.

**2.** The method according to claim 1, wherein the plurality of radio signals are frequency division multiplexing signals, and the plurality of radio signals have different initial frequencies.

**3.** The method according to claim 1 or 2, wherein the plurality of radio signals are code division multiplexing signals or Doppler division multiplexing signals, and signal pulses of the plurality of radio signals have different initial phase modulation codewords.

**4.** The method according to any one of claims 1 to 3, wherein the synchronization error comprises one or more of a time error, a frequency error, and a phase error between the plurality of radio signals.

**5.** The method according to any one of claims 1 to 4, wherein a signal synchronization error between the plurality of communication apparatuses is periodically detected, and the determining a first signal synchronization error based on the first echo signals received by the plurality of communication apparatuses comprises:

obtaining a second signal synchronization error in a target detection period based on the first echo signals received by the plurality of communication apparatuses; and
filtering the second signal synchronization error and a third signal synchronization error, to determine the first signal synchronization error, wherein the third signal synchronization error is a signal synchronization error determined in a period before the target detection period.

**6.** The method according to any one of claims 1 to 5, wherein the controlling each communication apparatus to receive a first echo signal comprises:

controlling each communication apparatus to receive a second echo signal, wherein the second echo signal comprises a third echo signal and the first echo signal, and the third echo signal is an echo signal of a radio signal sent by the communication apparatus receiving the second echo signal;
separating the third echo signal and the first echo signal from the second echo signal; and
performing service measurement based on the third echo signal.

**7.** A signal synchronization apparatus, comprising:

a control unit, configured to control a plurality of communication apparatuses to send a plurality of radio signals, wherein the plurality of radio signals are orthogonal to each other; and
the control unit is further configured to control each communication apparatus to receive a first echo signal, and the first echo signal is an echo signal of a radio signal sent by a communication apparatus other than the communication apparatus receiving the first echo signal; and
a processing unit, configured to determine a first signal synchronization error based on the first echo signals received by the plurality of communication apparatuses; and
the processing unit is further configured to perform, based on the first signal synchronization error, synchronization error compensation for the first echo signal received by each communication apparatus.

**8.** The apparatus according to claim 7, wherein the plurality of radio signals are frequency division multiplexing signals, and the plurality of radio signals have different initial frequencies.

**9.** The apparatus according to claim 7 or 8, wherein the plurality of radio signals are code division multiplexing signals or Doppler division multiplexing signals, and signal pulses of the plurality of radio signals have different initial phase modulation codewords.

**10.** The apparatus according to any one of claims 7 to 9, wherein the synchronization error comprises one or more of a time error, a frequency error, and a phase error between the plurality of radio signals.

**11.** The apparatus according to any one of claims 7 to 10, wherein the signal synchronization apparatus periodically detects a signal synchronization error between the plurality of communication apparatuses, and the processing unit is specifically configured to:

obtain a second signal synchronization error in a target detection period based on the first echo signals received by the plurality of communication apparatuses; and
filter the second signal synchronization error and a third signal synchronization error, to determine the first signal synchronization error, wherein the third signal synchronization error is a signal synchronization error determined in a period before the target detection period.

**12.** The apparatus according to any one of claims 7 to 11, wherein

the control unit is specifically configured to control each communication apparatus to receive a second echo signal, the second echo signal comprises a third echo signal and the first echo signal, and the third echo signal is an echo signal of a radio signal sent by the communication apparatus receiving the second echo signal;

the processing unit is further configured to separate the third echo signal and the first echo signal from the second echo signal; and
the processing unit is further configured to perform service measurement based on the third echo signal.

13. A communication apparatus, comprising at least one processor, coupled to a memory, wherein

the memory is configured to store a program or instructions; and
the at least one processor is configured to execute the program or the instructions, to enable the apparatus to implement the method according to any one of claims 1 to 6.

14. A chip, comprising at least one logic circuit and an input/output interface, wherein
the logic circuit is configured to control the input/output interface and perform the method according to any one of claims 1 to 6.

15. A computer-readable storage medium, storing instructions, wherein when the instructions are run on a computer, the computer is enabled to perform the method according to any one of claims 1 to 6.

16. A computer program product, comprising instructions, wherein when the instructions are run on a computer, the computer is enabled to perform the method according to any one of claims 1 to 6.

FIG. 1

200

| Control a plurality of communication apparatuses to send a plurality of radio signals, where the plurality of signals are orthogonal to each other | S201 |

| Control each communication apparatus to receive a first echo signal, where the first echo signal is an echo signal of a radio signal sent by a communication apparatus other than the communication apparatus receiving the first echo signal | S202 |

| Determine a first signal synchronization error based on the first echo signals received by the plurality of communication apparatuses | S203 |

| Perform, based on the first signal synchronization error, synchronization error compensation for the first echo signal received by each communication apparatus | S204 |

FIG. 2

FIG. 3

Radio signal of a communication apparatus 1

Radio signal of a communication apparatus 2

FIG. 4

Target

Echo signal of
the radio signal 1

Radio signal 2

Radio signal 1

Echo signal of
the radio signal 2

TRX1          ...          TX or RX          ...          TRX2

Communication
apparatus 1

Communication
apparatus 2

FIG. 5

...          ...

Radar 1          Radar 2

Signal separation  $S_{12}$  Synchronization
error estimation
and compensation  $S_{21}$  Signal separation

$S_{11}$          $S_{22}$

Monostatic target
detection and
estimation

Multistatic joint
detection and
estimation

Monostatic target
detection and
estimation

FIG. 6

Signal synchronization
apparatus 700

Control unit 701

Processing unit 702

FIG. 7

Signal synchronization
apparatus 800

Processor 801

Memory 802

FIG. 8

## INTERNATIONAL SEARCH REPORT

| International application No. |
|---|
| **PCT/CN2022/135677** |

**A. CLASSIFICATION OF SUBJECT MATTER**

H04W 56/00(2009.01)i

According to International Patent Classification (IPC) or to both national classification and IPC

**B. FIELDS SEARCHED**

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNTXT, CNKI, DWPI, ENTXT: 信号, 同步, 正交, 回波, 误差, 频差, 固有, 时间, 频率, 相位, 补偿, 混频, signal, synchronization, orthogonal, echo, error, frequency error, frequency difference, inherent, time, frequency, phase, compensation, frequency mixing

**C. DOCUMENTS CONSIDERED TO BE RELEVANT**

| Category* | Citation of document, with indication, where appropriate, of the relevant passages | Relevant to claim No. |
|---|---|---|
| Y | CN 111983593 A (WUXI LEIHUA TECHNOLOGY CO., LTD.) 24 November 2020 (2020-11-24)<br>description, paragraphs 3-15 | 1-16 |
| Y | CN 113466855 A (AEROSPACE INFORMATION RESEARCH INSTITUTE, CHINESE ACADEMY OF SCIENCES) 01 October 2021 (2021-10-01)<br>description, paragraphs 5-34 | 1-16 |
| A | CN 110987121 A (XIAMEN FOUR-FAITH COMMUNICATION TECHNOLOGY CO., LTD.) 10 April 2020 (2020-04-10)<br>entire document | 1-16 |
| A | US 2019132813 A1 (GENERAL ELECTRIC COMPANY) 02 May 2019 (2019-05-02)<br>entire document | 1-16 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 February 2023** | **24 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT
### Information on patent family members

International application No.

**PCT/CN2022/135677**

| Patent document cited in search report | | | Publication date (day/month/year) | Patent family member(s) | | | Publication date (day/month/year) |
|---|---|---|---|---|---|---|---|
| CN | 111983593 | A | 24 November 2020 | None | | | |
| CN | 113466855 | A | 01 October 2021 | None | | | |
| CN | 110987121 | A | 10 April 2020 | None | | | |
| US | 2019132813 | A1 | 02 May 2019 | US | 10834693 | B2 | 10 November 2020 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210178255